Europäisches Patentamt

European Patent Office

Office européen des brevets

(11) Veröffentlichungsnummer: **0 362 582**
**A2**

## (12) EUROPÄISCHE PATENTANMELDUNG

(21) Anmeldenummer: **89116930.2**

(22) Anmeldetag: **13.09.89**

(51) Int. Cl.5: **B01J 2/00**

(30) Priorität: **16.09.88 CH 3473/88**

(43) Veröffentlichungstag der Anmeldung:
**11.04.90 Patentblatt 90/15**

(84) Benannte Vertragsstaaten:
**AT BE DE ES FR GB IT NL SE**

(71) Anmelder: **MESSER GRIESHEIM GMBH**
**Hanauer Landstrasse 330**
**D-6000 Frankfurt/Main(DE)**

(72) Erfinder: **Spörri, Hans-Peter**
**Rehhagstrasse 16**
**CH-4434 Hölstein(CH)**

(54) **Vorrichtung zum Gefrier-Pelletieren von Flüssigstoffen.**

(57) Pellets aus gefrorenen Flüssigstoffen lassen sich gewinnen, indem man den Flüssigstoff aus einem Flüssigstoffbehälter (1) durch eine Tropfeinrichtung in Form von Tropfen in eine Kühlflüssigkeit fallen läßt. Die Tropfeinrichtung im Boden des Flüssigstoffbehälters besitzt eine Vielzahl von verstellbaren Durchlauföffnungen. Die Verstellbarkeit wird durch gegeneinander verschiebbare Tropfscheiben (9, 10) erreicht. Zwecks einer einfachen Veränderung von Tropfengröße und Tropfenform beim Eintropfen unterschiedlicher Flüssigstoffe wird die der Kühlflüssigkeit zugewandte Tropfscheibe (10) mit auswechselbaren, düsenartigen Abtropfkörpern (25) bestückt.

FIG. 1

EP 0 362 582 A2

## Vorrichtung zum Gefrier-Pelletieren von Flüssigstoffen

Die Erfindung betrifft eine Vorrichtung zum Gefrier-Pelletieren von Flüssigstoffen durch Eintropfen in eine Kühlflüssigkeit, die eine zum Gefrier-Erstarren der Tropfen ausreichende Tieftemperatur aufweist, gemäss dem Oberbegriff des Patentanspruchs 1.

Das Gefrier-Pelletieren dient dem schnellen Einfrieren von flüssigen oder zähflüssigen Stoffen, z.B. von empfindlichen Flüssigkeiten mit organischen Komponenten oder von Lösungen und Suspensionen, wie sie insbesondere in der Biotechnologie, in der Nahrungsmittelindustrie und in der chemischpharmazeutischen Industrie anfallen. Das Einfrieren empfindlicher Flüssigstoffe muss möglichst schnell und gleichmässig erfolgen, damit Kälteschäden am Produkt vermieden werden.

Dies trifft besonders für Bakterien-Suspensionen zu. Bei einem zu langsamen Gefrieren könnten Zellwand und Zellgewebe der Bakterien durch zu starke Eiskristallbildung zerstört werden, wodurch die Überlebensrate solcher Zellen auf ein unzulässig geringes Mass absinken würde.

Der Einfriervorgang erfolgt durch Abtropfen der Flüssigstoffe in ein flüssiges Kühlmittel, z.B. Stickstoff. Voraussetzung für eine schonende Behandlung der Produkte im Kühlmittel sind gleich grosse Tropfenvolumina in etwa konstanter Tropfenform, so dass einerseits die Verweilzeit im Kühlmittel möglichst kurz sein kann und trotzdem alle Tropfen vollständig durchgefrieren. Eine Prozessregelung sorgt für eine einheitliche minimale Verweilzeit der Tropfen im Kühlmittel. Danach sollen alle Tropfen im Kühlmittel durchgefroren sein, und das entstandene Gefriergranulat wird z.B. automatisch aus dem Kühlmittel gefördert.

Gemäss einem früheren Vorschlag soll eine besondere Abtropfvorrichtung die für die gestellten Bedingungen optimale Tropfenform beim Eintritt in das Kühlmittel und eine gleichmässige Tropfengrösse sicherstellen. Nach diesem früheren Vorschlag werden die Tropfen an einer Tropfplatte gebildet, welche zum Beispiel den unteren Abschluss eines Behälters für das zu verarbeitende Produkt darstellt. Die Tropfplatte weist düsenartige Öffnungen auf, durch welche das flüssige Produkt unter der Wirkung des statischen Eigendrucks oder unter Einfluss von Fremddruck in eine Gasatmosphäre oder in ein leichtes Vakuum austritt. Die Tropfplatte ist in einer gewissen kritischen Höhe über der Oberfläche des darunter befindlichen Kühlmittels angeordnet.

Die Form der Tropfen wird einerseits von der Austrittskante der Düsen und andererseits von der Höhe der Tropfplatte über der Kühlmitteloberfläche beeinflusst. Fällt der am Düsenaustritt abgerissene Tropfen z.B. aus zu grosser Höhe zu hart auf die Kühlmitteloberfläche, ändert sich die Tropfenform unkontrolliert, oder der Tropfen wird sogar in mehrere ungleich grosse Teile zerschlagen. Ferner hat es sich gezeigt, dass auch die Oberflächeneigenschaften des Materials mindestens im Bereich des Düsenauslasses für das Abtropfverhalten mitentscheidend sind. Diese Eigenschaften beruhen auf den Oberflächenspannungen des jeweils zu verarbeitenden Produktes. Es ist daher wünschenswert, die Verfahrensparameter für das jeweils zu verarbeitende Produkt individuell einzustellen und die exakte Einhaltung dieser Werte sicherzustellen. Mit bisher bekannten Vorrichtungen zum Gefrier-Pelletieren ist dies nur unzureichend möglich.

Es ist Aufgabe der vorliegenden Erfindung, eine Vorrichtung der eingangs definierten Art zu schaffen, welche die Herstellung einer möglichst gleichmässigen Produktqualität bei unterschiedlichen Verfahrensparametern erlaubt, so dass die Produktionsausbeute auch bei wechselnden Loten verbessert wird.

Diese Aufgabe wird erfindungsgemäss durch die in Patentanspruch 1 definierten Merkmale gelöst.

Die beanspruchte Lösung erlaubt eine sehr flexible Einstellung und eine einfache Veränderung der wichtigsten Verfahrensparameter, so dass Tropfengrösse, Tropfenform und Abtropfhöhe einfach und zuverlässig reproduzierbar auf die gewünschten Werte eingestellt werden können und somit das Gefrierprodukt in der gewünschten Qualität und Gleichmässigkeit hergestellt werden kann. Die Produktausbeute lässt sich damit merklich verbessern, wodurch sich die Rentabilität des Verfahrens, insbesondere bei hochempfindlichen Produkten, verbessert. Unbrauchbare Lote lassen sich praktisch vermeiden.

Für unterschiedliche Produkt-Chargen können Düsenkörper aus geeignetem Material, mit geeigneten Düsendurchmessern und Abtropfkanten eingesetzt werden. Es ist sogar möglich, einzelne Sektoren der Tropfeinrichtung vorübergehend mit unterschiedlichen Düsenkörpern zu bestücken, um für neue und in ihrem Verhalten unbekannte Produkt-Chargen versuchsweise die optimale Düsengrösse und Düsenform zu ermitteln. Im Einzelfall erübrigen sich daher Vorversuche an nur für diesen Zweck betriebenen Experimentieranlagen. Durch kurzzeitige Umstellung lässt sich die normale Produktionsanlage vor der eigentlichen Produktionsaufnahme verwenden.

Weitere Vorteile der Erfindung ergeben sich aus der nachfolgenden Beschreibung, in welcher Einzelheiten der Erfindung anhand bevorzugter Ausführungsbeispiele mit Hilfe der Zeichnungen näher erläutert werden.

Es zeigen:

Fig.1 die schematische Schnittdarstellung eines über einem Kühlflüssigkeitsbad angeordneten Flüssigstoffbehälters mit einer Tropfeinrichtung im unteren Bereich des Behälters,

Fig.2 das Beispiel einer Tropfscheibe in Aufsicht, und

Fig.3 die Tropfscheibe mit den eingesetzten Düsenkörpern, in vergrösserter Darstellung.

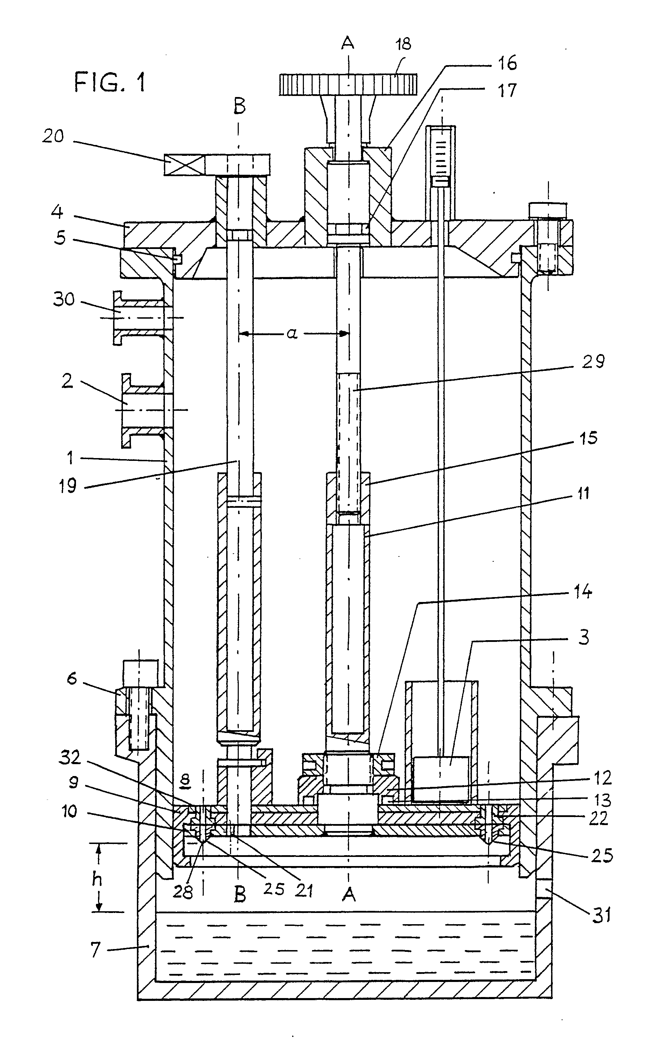

Die Gefriereinrichtung nach Fig. 1 besteht aus einem Behälter 1, in den das zu verarbeitende flüssige oder pastöse Produkt eingefüllt wird. Als Beispiel ist in Fig. 1 ein zylindrischer Behälter dargestellt, dessen Achse mit A-A bezeichnet ist. Der Einfüllvorgang erfolgt unter Einsatz einer Prozesssteuerung auf einen bestimmten Füllstand im Behälter. Eingefüllt wird über eine Eintragsöffnung 2. Der Füllstand wird mit einer Füllstandsanzeige 3 überwacht, die z.B. auf einen oberen und einen unteren Füllstandsgrenzwert anspricht und bei Erreichen des unteren Grenzwertes den Nachfüllvorgang auslöst und ihn bei Erreichen des oberen Füllstandes wieder abstellt.

Der obere Teil des Behälters 1 ist durch einen Deckel 4 abgeschlossen, der zwei an späterer Stelle näher beschriebene Verstelleinrichtungen zur Feineinstellung von Verfahrensparametern enthält. Der Deckel ist fest und unter Zwischenlage einer Dichtung 5 mit dem Behälter 1 verschraubt. Im unteren Teil ist der Behälter 1 über einen Flansch 6 auf die Halterung eines Kühlmittelbehälters 7 aufgesetzt.

Der untere stirnseitige Bodenabschluss des Behälters 1 wird von einer Tropfeinrichtung 8 abgeschlossen, die im wesentlichen aus zwei bündig aneinanderliegenden Scheiben 9 und 10 besteht. Im gewählten Beispiel sind beide Scheiben zentrisch zur Zylinderachse A-A angeordnet. Die behälterinnere Scheibe 9 ist als eigentlicher Behälterboden ausgebildet, gegen welchen die behälteräussere Scheibe 10 um die Zylinderachse A-A verdrehbar ist. Dazu ist die äussere Scheibe 10 an einer Zentralhülse 11 befestigt, z.B. angeschweisst. Ein an der Zentralhülse angebrachter Flanschring 12 liegt über einen O-Ring 13 an der inneren Scheibe 9 an und drückt diese unter der Wirkung einer Ringmutter 14 gegen die äussere Scheibe 10. Durch die gegenseitige Verdrehung lässt sich der wirksame Öffnungsquerschnitt von später beschriebenen Düsenkörpern verändern, welche in den Scheiben 9 und 10 angebracht sind.

In der Zentralhülse 11 ist ein Gewindeteil 15 angebracht, in welchem ein zentraler Gewindebolzen 29 läuft. Dieser Gewindebolzen ist in einer Führung 16 innerhalb des Deckels 4 unter Zwischenlage einer Dichtung 17 nach aussen geführt und mit einer Betätigungsvorrichtung 18 versehen. Dabei kann es sich um ein Handrad oder um einen gesteuerten Motorantrieb handeln. Mit Hilfe dieser Einrichtung lässt sich der Behälterboden, bestehend aus der inneren Scheibe 9 und der bündig anliegenden äusseren Scheibe 10, gezielt in der Höhe verstellen. Die Höhenverstellung erfolgt relativ zur Wand des Behälters 1 und damit relativ zum darunter befindlichen Kühlmittelbehälter 7.

Eine zweite Verstellachse 19 verläuft vom Deckel 4 parallel zur Zylinderachse A-A, um einen Betrag a radial zur Zylinderachse versetzt. Die von einer zweiten Betätigungsvorrichtung 20 ausgehende Drehbewegung wird auf einen Exzenter 21 am unteren Ende der Verstellachse 19 übertragen. Die Drehachse des Exzenters ist in der inneren Scheibe 9 gelagert, während der Angriffspunkt des Exzenters in der äusseren Scheibe liegt. Damit lässt sich die äussere Scheibe 10 gegenüber der inneren Scheibe 9 um die Zentralachse A-A des Behälters 1 um kleine Winkelbeträge verstellen.

Die innere Scheibe 9 ist mit Düseneinlaufkörpern 22 versehen, welche eine Düsenbohrung 23 und auf der Seite der äusseren Scheibe eine flanschartige Verbreiterung 24 aufweisen. Im gezeigten Beispiel sind die Düseneinlaufkörper 22 in der Scheibe 9 ebenfalls leicht auswechselbar eingesetzt.

Auf ähnliche Art sind in der äusseren Scheibe 10 auswechselbare düsenartige Abtropfkörper 25 eingesetzt, welche mit flanschartigen Verbreiterungen 26 auf der Seite der inneren Scheibe 9 versehen sind. Die flanschartigen Verbreiterungen 26 der Abtropfkörper wirken mit den Verbreiterungen 24 der Düseneinlaufkörper 22 zusammen. Durch die bündig aneinander liegenden Scheiben 9 und 10 werden die Düsenkörper in den Scheiben gehalten.

Der Abtropfkörper 25 ist mit einer Abtropfdüsenbohrung 27 und in seinem untersten Bereich mit einer besonders ausgestalteten Abtropfkante 28 versehen. Die Form der Abtropfkante kann entsprechend dem zu verarbeitenden Produkt verschieden gestaltet sein. Die optimale Form lässt sich jeweils durch Versuche ermitteln, so dass unter den jeweils herrschenden Bedingungen ein gleichmässiger und konstanter Abriss des Flüssigkeitstropfens vom Düsenkörper gewährleistet ist. Auch der Einfluss der Oberflächenspannung kann durch unterschiedliche Materialwahl für den Abtropfkörper experimentell optimiert werden.

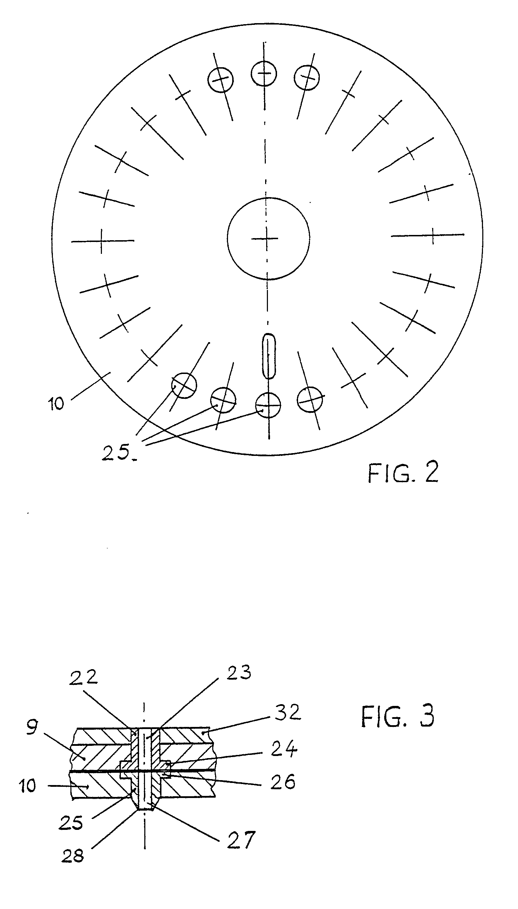

Wie aus Fig. 2 ersichtlich ist, sind auf der inneren Scheibe 9 weitere Düseneinlaufkörper und auf der äusseren Scheibe 10 weitere Abtropfkörper, im Beispiel entlang eines Radius um das Zentrum der Scheiben, angeordnet. Gemeinsam bildet je ein Paar Düseneinlaufkörper und Abtropfkörper eine verstellbare Düse, wobei die Verstellung der wirksamen Düsenöffnung gemeinsam für alle Düsen mit Hilfe des Exzenters 21 erfolgt, der über die zweite Betätigungsvorrichtung 19 verstellbar ist. Damit lässt sich die Durchflussmenge auf die gewünschten Werte einstellen.

Die Düseneinlaufkörper 22 und die Abtropfkörper 25 sind vorzugsweise aus Edelstahl oder aus einer geeigneten Kunststoffverbindung hergestellt. Die Materialwahl richtet sich einerseits nach der Verträglichkeit mit dem zu verarbeitenden Produkt und andererseits nach den erwähnten optimalen Oberflächeneigenschaften, welche den kontrollierten Abriss der Tropfen begünstigen.

Die in den Flüssigstoffbehälter 1 auf ein bestimmtes Niveau eingefüllte Flüssigkeit oder pastöse Masse wird unter der Wirkung des statischen Eigendrucks oder durch Beaufschlagen des Behälters mit einem Druckmedium durch die kombinierten Düsenkörper am Boden des Behälters gedrückt. Durch geeignete Wahl der Abtropfkantenform und durch Einstellung der wirksamen Düsenöffnungen und der Abtropfhöhe h (gemessen von der Oberfläche des Kühlflüssigkeitsbades) wird erreicht, dass sich die an der Abtropfkante 28 bildenden Tropfen regelmässig und in konstanter Tropfenform ablösen. Für leicht zähflüssige Massen haben sich z.B. wirksame Düsenöffnungen in der Grössenordnung zwischen 0,7 und 2,0 mm als zweckmässig erwiesen.

Die optimalen Werte werden, soweit sie nicht schon bekannt sind, in Vorversuchen ermittelt, zu denen sich die beschriebene Vorrichtung zusätzlich zum Produktionsbetrieb besonders gut eignet. Anstelle von Abtropfkörpern mit einheitlichen Durchmessern werden zu diesem Zweck in der äusseren Scheibe verschiedene Bereiche, z.B. verschiedene Sektoren, mit Abtropfkörpern bestückt, die abgestufte Düsendurchmesser bzw. verschiedenen Abtropfkantenformen aufweisen. Auch unterschiedliche Materialien für die Abtropfkörper können nebeneinander zum Einsatz kommen. Während eines solchen Einstellversuches werden z.B. über eine Sichtöffnung 31 in der Wand des Kühlmittelbehälters 7 die verschiedenen Tropfenformen beobachtet, so dass sich für den nachfolgenden Produktionslauf die optimale Düsenwahl für ein neu zu verarbeitendes Produkt auf einfache Weise treffen lässt. In einer angeschlossenen Prozessteuer-Einheit lassen sich die ermittelten optimalen Daten für spätere Produktionsläufe abspeichern.

Um die Funktion der Abtropfkörper wegen des darunter befindliche Kühlmittels auch im Dauerbetrieb sicherzustellen, ist der Behälterboden mit einer Heizeinrichtung 32 versehen. Damit wird der Bereich um die Abtropfkörper auf einer Temperatur gehalten, die geringfügig grösser ist als die Erstarrungstemperatur des zu verarbeitenden Produktes.

Der Behälter 1 kann grundsätzlich eine beliebige Form aufweisen. Für die Verarbeitung von Sterilprodukten, insbesondere unter Anwendung der Heissluft-Sterilisierung, ist die Zylinderform von Vorteil. Die Heissluft wird z.B. über einen entsprechend gestalteten Heisslufteinlass 30 nahezu tangential in das Behälterinnere eingeführt, wodurch sich, unterstützt durch die zylinderförmige Behälterwand, eine gute Verwirbelung der Heissluft ergibt und alle Teile des Innenraums von der Heissluft erreicht werden. Auch die Düsenöffnungen werden von dem sterilisierenden Heissluftstrom erfasst.

## Ansprüche

1. Vorrichtung zum Gefrier-Pelletieren von Flüssigstoffen durch Eintropfen in eine Kühlflüssigkeit, welche eine zum Gefrier-Erstarren der Tropfen ausreichende Tieftemperatur aufweist, mit einem Flüssigstoffbehälter (1), dessen Boden eine Tropfeinrichtung mit einer Vielzahl von verstellbaren Durchlauföffnungen aufweist, wobei die Verstellbarkeit der Durchlauföffnungen durch gegeneinander verschiebbare Tropfscheiben (9, 10) gegeben ist, dadurch gekennzeichnet, dass mindestens die der Kühlflüssigkeit zugewandte Tropfscheibe (10) mit düsenartigen Abtropfkörpern (25) bestückt ist, welche als auswechselbare Einsatzkörper ausgebildet sind.

2. Vorrichtung nach Anspruch 1, dadurch gekennzeichnet, dass die in der äusseren Tropfscheibe (10) eingesetzten Abtropfkörper (25) mit Düseneinlaufkörpern (22) in der zweiten, inneren Tropfscheibe (9) wirkungsmässig korrespondieren.

3. Vorrichtung nach Anspruch 2, dadurch gekennzeichnet, dass die Düseneinlaufkörper (22) und Abtropfkörper (25) im gegenseitigen Berührungbereich flanschartige verbreiterte Ansätze (24, 26) aufweisen.

4. Vorrichtung nach Anspruch 1, dadurch gekennzeichnet, dass der Flüssigstoffbehälter (1) als Kreiszylinder ausgebildet ist und dass die äussere Scheibe (10) der Tropfeinrichtung um die Zylinderachse (A-A) des Flüssigstoffbehälters verdrehbar ist.

5. Vorrichtung nach den Ansprüchen 2 und 4, dadurch gekennzeichnet, dass die korrespondierenden Düsenkörper (22, 25) entlang Radien um die Zylinderachse (A-A) auf den Scheiben (9, 10) angeordnet sind.

6. Vorrichtung nach Anspruch 4, dadurch gekennzeichnet, dass die Verstellung der äusseren Scheibe (10) durch eine Exzentervorrichtung (19, 20, 21) erfolgt, deren Drehachse (B-B) parallel zur Zylinderachse (A-A) verläuft und ihr gegenüber einen Versatz (a) aufweist.

7. Vorrichtung nach den Ansprüchen 2 und 4, dadurch gekennzeichnet, dass die aus der inneren Scheibe (9) und der äusseren Scheibe (10) bestehende Tropfeinrichtung innerhalb der zylinderförmigen Behälterwand mit Hilfe einer Verstelleinrichtung (18, 15, 29) höhenverstellbar ist, wodurch der Abstand (h) der Abtropfkörper (25) zur Oberfläche des darunter befindlichen Kühlflüssigkeitsbades einstellbar ist.

8. Vorrichtung nach Anspruch 1, dadurch gekennzeichnet, dass die Tropfscheiben (9, 10) durch eine Heizeinrichtung (32) beheizbar sind.

FIG. 1

FIG. 2

10

25.

FIG. 3

22    23
9         32
       24
10        26
25        27
28